Europäisches Patentamt

European Patent Office

Office européen des brevets

(11) Numéro de publication: **0 311 536**
**A2**

## (12) DEMANDE DE BREVET EUROPEEN

(21) Numéro de dépôt: 88420335.7

(22) Date de dépôt: 05.10.88

(51) Int. Cl.⁴: **B 62 M 9/12**
G 05 G 7/02, G 05 G 7/06,
B 62 M 25/04, B 62 K 23/06

(30) Priorité: 05.10.87 FR 8713745

(43) Date de publication de la demande:
**12.04.89 Bulletin 89/15**

(84) Etats contractants désignés:
**AT BE CH DE ES FR GB GR IT LI LU NL SE**

(71) Demandeur: **Bonnard, René**
**Ecole Maternelle**
**F-91660 Mereville (FR)**

**Bonnard, Pierre**
**Mirabel**
**F-82440 Realville (FR)**

**Desclozeaux, Christophe**
**Le Bois de Boulogne**
**F-91660 Mereville (FR)**

**BG INNOVATIONS**
**6 rue René-Ampère Z. I. des Cézardes**
**F-74600 Seynod (FR)**

(72) Inventeur: **Bonnard, René**
**Ecole Maternelle**
**F-91660 Mereville (FR)**

**Bonnard, Pierre**
**Mirabel**
**F-82440 Realville (FR)**

**Desclozeaux, Cristophe**
**Le Bois de Boulogne**
**F-91660 Mereville (FR)**

(74) Mandataire: **Bratel, Gérard et al**
**Cabinet GERMAIN & MAUREAU B.P. 3011**
**F-69392 Lyon Cédex 03 (FR)**

(54) **Commande pour changements de vitesses de cycles et véhicules similaires.**

(57) Cette commande est destinée aux changements de vitesses avant et arrière du type "dérailleur", avec actionnement à distance par manette et câble de traction (12). Le mécanisme, associé au dérailleur (6), comprend un organe mobile (26) récepteur du déplacement du câble (12), un organe denté mobile (24) lié dans ses déplacements à des moyens de guidage (13,14) de la chaîne, un organe de mémoire (31,32) porté par l'organe récepteur (26) et coopérant avec la denture (44) de l'organe denté (24), et des moyens commandant le basculement de l'organe de mémoire (31,32). Ce mécanisme est tel qu'une traction de faible amplitude sur le câble (12), suivie d'un relâchement, déplace l'organe denté (24) dans un sens, et qu'une traction de plus grande amplitude sur le même câble, suivie d'un relâchement, déplace cet organe denté (24) dans le sens opposé, de manière à commander le passage des vitesses dans un sens ou dans l'autre, notamment vers un pignon (5) situé plus à droite ou plus à gauche.

FIG. 2

Bundesdruckerei Berlin

## Description

### Commande pour changements de vitesses de cycles et véhicules similaires

L'invention concerne une commande pour changements de vitesses de cycles et véhicules similaires. Cette invention se rapporte aussi bien à la commande des changements de vitesses "arrière" qu'à la commande des changements de vitesses "avant", et elle s'applique, plus précisément, aux changements de vitesses du type "dérailleur", dans lesquels la modification du rapport de transmission est obtenue par passage de la chaîne d'un pignon à un autre, dans le cas d'un dérailleur arrière associé à une roue libre, ou par passage de la chaîne d'un plateau denté à un autre, dans le cas d'un dérailleur avant associé au pédalier.

Les dérailleurs arrière ou avant sont commandés manuellement à distance, de façon classique, par un câble aboutissant à une manette pivotante placée soit sur un tube du cadre de la bicyclette, soit sur un embout du guidon de la bicyclette. En fonction de la position angulaire de la manette, la chaîne passe sur un pignon déterminé, dans le cas d'un dérailleur arrière, ou sur un plateau déterminé, dans le cas d'un dérailleur avant ; ainsi, selon le nombre de pignons ou de plateaux existants, la manette possède plusieurs positions angulaires correspondantes.

Il en résulte que le maniement de la manette est difficile à comprendre et à assimiler, notamment pour les néophytes, les positions angulaires de la manette étant difficiles à repérer de façon précise en l'absence habituelle de moyens d'indexation, et les sens et angles de rotation de la manette nécessaires pour obtenir le passage d'un pignon ou d'un plateau à un autre étant mal appréciés. Dans le cas du dérailleur arrière, les positions angulaires correctes de la manette peuvent être d'autant plus mal perçues que les pignons sont nombreux, ces positions étant alors très voisines les unes des autres. Dans le cas du dérailleur avant, une difficulté supplémentaire résulte de ce que le sens de manoeuvre de la manette est inversé par rapport à celui du dérailleur arrière : le cycliste doit tirer vers lui la manette du dérailleur avant, alors qu'on repousse en avant la manette du dérailleur arrière pour, dans les deux cas, obtenir un développement supérieur.

Un maniement incorrect des manettes de commande des dérailleurs n'est pas sans conséquences. En particulier, un mauvais positionnement de la chaîne est la source de frottements, de bruits désagréables et, ce qui est pire, de sauts de la chaîne au moment où le cycliste produit un effort important, ce qui peut causer un écart du cycliste, voire une chute.

La présente invention vise à éliminer ces inconvénients, en fournissant une commande nouvelle pour changements de vitesses de cycles et véhicules similaires qui procure une grande facilité d'emploi, même pour un cycliste peu expérimenté, et qui garantit ainsi agrément et sécurité.

A cet effet, l'invention a pour effet une commande pour changements de vitesses de cycles et véhicules similaires, du type dérailleur, avec moyens de guidage de la chaîne déplaçables transversalement entre au moins deux positions distinctes au moyen d'un organe de traction tel que câble, à partir d'un moyen d'actionnement tel que manette situé à distance, cette commande étant caractérisée en ce qu'elle comprend essentiellement, en combinaison :

- un organe mobile récepteur du déplacement de l'organe de traction tel que câble,

- un organe denté mobile, lié dans ses déplacements aux moyens de guidage de la chaîne, et comportant des dents en nombre au moins égal à celui des positions distinctes occupées par lesdits moyens de guidage de la chaîne,

- un organe de mémoire porté par l'organe récepteur et coopérant avec la denture de l'organe denté, et

- des moyens de basculement agissant sur l'organe de mémoire au cours de ses déplacements accompagnant ceux de l'organe récepteur, de telle sorte que, pour un déplacement de l'organe de traction tel que câble d'une faible amplitude, suivi d'un relâchement, l'organe denté est déplacé dans un premier sens selon une course correspondant à l'intervalle entre deux dents et, pour un déplacement de l'organe de traction tel que câble d'une plus grande amplitude, toujours suivi d'un relâchement, l'organe denté est déplacé dans un second sens également selon une course correspondant à l'intervalle entre deux dents.

La commande réalisée selon le principe de l'invention possède de nombreux avantages, par comparaison avec les commandes classiques :

- En premier lieu, la sélection d'une vitesse et le passage à une autre vitesse ne font pas appel à un positionnement ou un réglage devant être "dosé" de façon précise et sans repères par le cycliste : celui-ci n'a qu'à appliquer sur la manette une impulsion simple, de sens déterminé et en allant jusqu'en fin de course, à partir d'une position de repos et de rappel de la manette qui est invariable. Le placement correct des moyens de guidage transversal de la chaîne est assuré automatiquement par le mécanisme lui-même.

- Les manipulations de la manette entraînant, par une traction du câble dirigée toujours dans le même sens, un organe mobile intermédiaire, on bénéficie pour chacune des manoeuvres de toute la force de traction exercée sur la manette, pour mettre en oeuvre un faible déplacement des moyens de guidage transversal de la chaîne. De plus, la manette n'étant soumise à aucun système de friction, on parvient dans tous les cas à une manipulation très douce de cette dernière, ce qui procure un grand confort d'utilisation.

- Le relâchement de la manette entraînant automatiquement un retour de cette dernière dans la même position de rappel, l'utilisation s'en trouve simplifiée et rendue plus rapide. Une simple impulsion sur la manette jusqu'en fin de course, dans un sens ou dans l'autre, permet un changement de vitesse assuré et précis.

- La commande objet de l'invention est utilisable avec des dérailleurs arrière et avant conservant une structure de base classique, notamment les dérailleurs arrière avec parallélogramme déformable et roulettes de guidage de la chaîne, et les dérailleurs avant avec étrier traversé par la chaîne.

- Enfin, le principe de la commande selon l'invention permet de monter la manette en n'importe quel endroit du cycle ou véhicule similaire équipé de cette commande.

L'organe récepteur peut être constitué par un bras monté pivotant autour d'un axe, soumis à l'action d'un ressort de rappel et actionné unidirectionnellement par l'organe de traction tel que câble dont une extrémité est attachée à ce bras pivotant.

Quant à l'organe denté, celui-ci est avantageusement constitué par un secteur, monté tournant par son sommet autour d'un axe et pourvu d'une série de dents sur son bord incurvé.

Dans le cas d'une commande appliquée à un dérailleur à parallélogramme déformable, le bras précité et le secteur denté sont de préférence montés pivotants autour du même axe, confondu avec un axe d'articulation d'une biellette du parallélogramme, le secteur denté étant lié en rotation avec la biellette, de préférence d'une manière réglable. La réalisation obtenue est ainsi relativement simple.

Selon une forme de réalisation particulière, l'organe de mémoire comprend une pièce primaire articulée directement sur le bras pivotant et rappelée dans au moins une position privilégiée et une pièce secondaire articulée sur la pièce primaire et pourvue d'un ergot tourné vers l'organe denté et prévu pour s'engager dans les dents de cet organe.

La pièce primaire peut être conçue comme une pièce basculante, mobile entre deux positions stables définies par des butées portées par le bras pivotant et soumise à l'action d'un ressort de dépassement de point mort, les moyens de basculement occasionnant le passage de ladite pièce primaire d'une position stable à l'autre.

Dans une variante, la pièce primaire est poussée par un ressort vers une position stable unique définie par une butée portée par le bras pivotant, les moyens de basculement occasionnant la séparation de la pièce primaire et de la butée.

Ces moyens de basculement comprennent une pluralité de butées essentiellement fixes, coopérant avec les pièces mobiles du mécanisme.

Suivant un mode de réalisation, la pièce secondaire comporte deux talons, le premier talon coopérant avec une butée appartenant aux moyens de basculement, en passant alternativement d'un côté et de l'autre de cette butée, et le second talon étant soumis à l'action d'un ressort poussant ce talon contre un bec de la pièce primaire.

Dans le cas où la pièce primaire possède une seule position stable, la butée, avec laquelle coopère le premier talon de la pièce secondaire, est une butée semi-mobile comportant une partie fixe et une partie mobile réunie à la partie fixe par l'intermédiaire d'une lame-ressort.

Selon un autre aspect de l'invention, dans le cas où l'organe de traction est un câble, le moyen d'actionnement est une manette déplaçable par pivotement, à partir d'une position de repos, vers l'une ou l'autre de deux autres positions, de manière à exercer sur le câble soit une traction de faible amplitude, soit une traction de plus grande amplitude, des moyens à ressort étant prévus pour ramener la manette dans sa position de repos à partir de l'une ou l'autre des deux autres positions. Ces deux autres positions de la manette sont notamment situées de part et d'autre de la position de repos, et la manette comporte alors deux cames pour l'enroulement du câble, le câble s'enroulant autour de l'une ou l'autre came et sur des longueurs différentes selon le sens d'actionnement de la manette.

De toute façon, l'invention sera mieux comprise à l'aide de la description qui suit, en référence au dessin schématique annexé représentant, à titre d'exemples non limitatifs, quelques formes d'exécution de cette commande pour changements de vitesses de cycles et véhicules similaires :

Figure 1 est une vue d'ensemble, de côté, d'une bicyclette équipée de changements de vitesses avant et arrière pouvant être actionnés par des commandes conformes à la présente invention ;

Figure 2 est une vue par l'arrière d'un dérailleur arrière à parallélogramme pourvu d'une commande selon l'invention, dans une première forme d'exécution ;

Figures 3 à 12 sont des vues partielles, et à échelle agrandie, de la commande de figure 2, dans diverses positions occupées au cours du fonctionnement ;

Figure 13 est une vue partielle, en perspective, d'une variante de cette commande pour dérailleur arrière ;

Figure 14 illustre une phase particulière du fonctionnement de la variante selon la figure 13 ;

Figure 15 est une vue par l'arrière d'un dérailleur avant pourvu d'une commande selon l'invention ;

Figure 16 est une vue partielle, en perspective, d'une manette pour l'actionnement de changements de vitesses pourvus d'une commande selon l'invention ;

Figure 17 est une vue de côté de la manette de figure 16, avec indication de ses positions ;

Figure 18 est une vue similaire à figure 17, mais relative à une variante de cette manette.

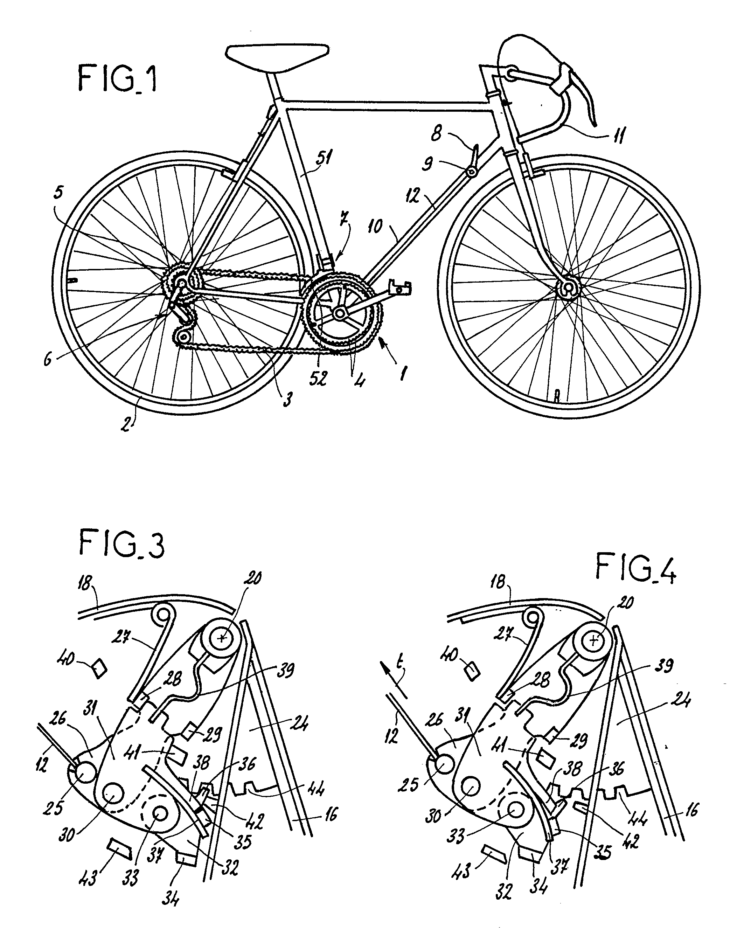

La figure 1 montre une bicyclette, dans laquelle la transmission entre le pédalier 1 et la roue arrière 2 est assurée par une chaîne sans fin 3 passant, à l'avant, sur l'un ou l'autre de deux ou plusieurs plateaux dentés 4 et, à l'arrière, sur l'un de plusieurs pignons 5 appartenant à un mécanisme de "roue libre". Le plateau 4 et le pignon 5 sur lesquels passe à un moment donné la chaîne 3 déterminent le rapport de transmission. Un dérailleur arrière 6 permet de faire passer la chaîne 3 d'un pignon 5 à un autre pignon. Un dérailleur avant 7, associé au pédalier 1, est prévu pour faire passer la même chaîne 3 de l'un à l'autre des plateaux dentés 4. Chaque dérailleur arrière ou avant, respectivement 6 ou 7, peut être commandé manuellement à distance à l'aide d'une manette 8 montée pivotante autour d'un axe 9, et située par exemple sur le tube diagonal 10 du cadre de la bicyclette, ou encore sur le guidon 11. Un câble 12, seulement représenté partiellement, relie chaque manette 8 au dérailleur correspondant 6 ou 7.

Dans le cas d'un changement de vitesses classique, la sélection d'un rapport et le passage d'un rapport à un autre s'effectuent en amenant la manette 8 dans diverses positions angulaires autour de son axe de pivotement 9. A chaque position angulaire de la manette 8, il correspond une position particulière du câble 12 provoquant la sélection d'un plateau 4 ou d'un pignon 5, et déterminant ainsi un rapport.

Au contraire, dans le cas de la présente invention, la manette 8 et le câble 12 occupent une position de repos invariable, et le passage des vitesses s'obtient par un action sur la manette 8 suivie d'un relâchement de celle-ci et s'accompagnant d'une traction sur le câble 12. Plus particulièrement, la manette 8 permet d'exercer sur le câble 12 deux actions différenciées, à savoir une traction de faible amplitude ou une traction de plus grande amplitude, par des moyens qui seront décrits en détail plus bas. L'une des actions provoque le passage à un rapport supérieur, et l'autre action provoque le passage inverse à un rapport inférieur, qu'il s'agisse du dérailleur arrière 6 ou du dérailleur avant 7.

La conversion du déplacement commandé du câble 12 est assurée, au niveau du dérailleur, par un mécanisme représenté, sur la figure 2, dans le cas d'application à un dérailleur arrière 6 du type à parallélogramme. Le dérailleur arrière 6 comprend, de façon bien connue, deux roulettes 13 et 14 de guidage et de tension pour la chaîne (ici non représentée), qui sont portées par un support mobile 15 relié de façon articulée, par l'intermédiaire de deux biellettes parallèles 16 et 17, à un support fixe 18 monté sur le cadre de la bicyclette. Les deux supports 15 et 18, les deux biellettes 16 et 17 et leurs quatre axes d'articulation 19, 20, 21 et 22 définissent un parallélogramme déformable, grâce auquel le plan vertical contenant les deux roulettes 13 et 14 peut être déplacé transversalement selon la flèche 23, pour être amené en coïncidence avec le plan de l'un ou l'autre des pignons 5. Le support fixe 18 forme lui-même un boîtier, ou est solidaire d'un boîtier qui renferme le mécanisme en question.

Ce mécanisme comprend un secteur denté 24, monté tournant poar son sommet autour de l'axe d'articulation 20 et solidarisé en rotation de manière réglable avec la biellette 16, de sorte que le pivotement du secteur 24 s'accompagne de celui de la biellette 16.

L'extrémité du câble 12 éloignée de la manette comporte un embout cylindrique soudé 25, encastré dans un évidement d'un bras 26 également monté pivotant autour de l'axe 20 précité. Le bras pivotant 26, constituant ainsi l'organe récepteur du mouvement transmis par le câble 12, est rappelé dans une position de repos par un ressort 27, libre d'agir lorsque la manette est relâchée ; le ressort 27 s'appuie d'une part contre la paroi du boîtier 18, et d'autre part contre une première butée 28 solidaire du bras pivotant 26. Une seconde butée 29 est prévue sur ce bras 26, en regard de la première butée 28.

Le bras 26 comporte, vers son extrémité éloignée de son axe de pivotement 20, un axe d'articulation 30 pour un organe de mémoire complexe, qui comprend une pièce primaire 31 articulée directement sur le bras 26 autour de l'axe 30, et une pièce secondaire 32 articulée sur la pièce primaire 31 autour d'un axe 33, les différents axes 20, 30 et 33 étant parallèles entre eux. La pièce secondaire 32 comporte vers son extrémité libre deux talons 34 et 35, et elle est pourvue encore d'un ergot 36 tourné vers le secteur denté 24 et prévu pour s'engager dans les dents de ce secteur 24. Un ressort à lame 37, fixé dans la pièce primaire 31 et prenant appui sous le talon 35 de la pièce secondaire 32, pousse ce talon 35 contre un bec 38 de la pièce primaire 31.

Un autre ressort 39 agit sur la pièce primaire 31 à la manière d'une ressort à dépassement de point mort, pour repousser cette pièce primaire 31 vers l'une ou l'autre des deux positions extrêmes de basculement, définies respectivement par les butées en vis-à-vis 28 et 29 portées par le bras pivotant 26 et coopérant avec des parties correspondantes de la pièce primaire 31.

Le mécanisme comprend encore des moyens de basculement, composés de plusieurs butées 40,41, 42 et 43 fixes par rapport au boîtier 18. Deux premières butées fixes 40 et 41 sont prévues, respectivement, de part et d'autre du bras pivotant 26. La troisième butée fixe 42 est située sur la trajectoire de l'ergot 36 de la pièce secondaire 32. La dernière butée fixe 43 est placée sur la trajectoire du talon 34 de cette pièce secondaire 32.

En position de repos, comme le montre la figure 3, la pièce primaire 31 est appuyée dans une position de basculement contre la butée 28 du bras 26, et se trouve aussi arrêtée contre la butée fixe 41. L'ergot 36 de la pièce secondaire 32 est appuyé sur la butée fixe 42 et engagé dans l'une des dents 44 du secteur denté 24. La position angulaire du secteur 24 est ainsi "verrouillée", donc l'orientation de la biellette 16 est fixée, ce qui détermine la sélection d'un pignon 5 particulier correspondant à une vitesse donnée.

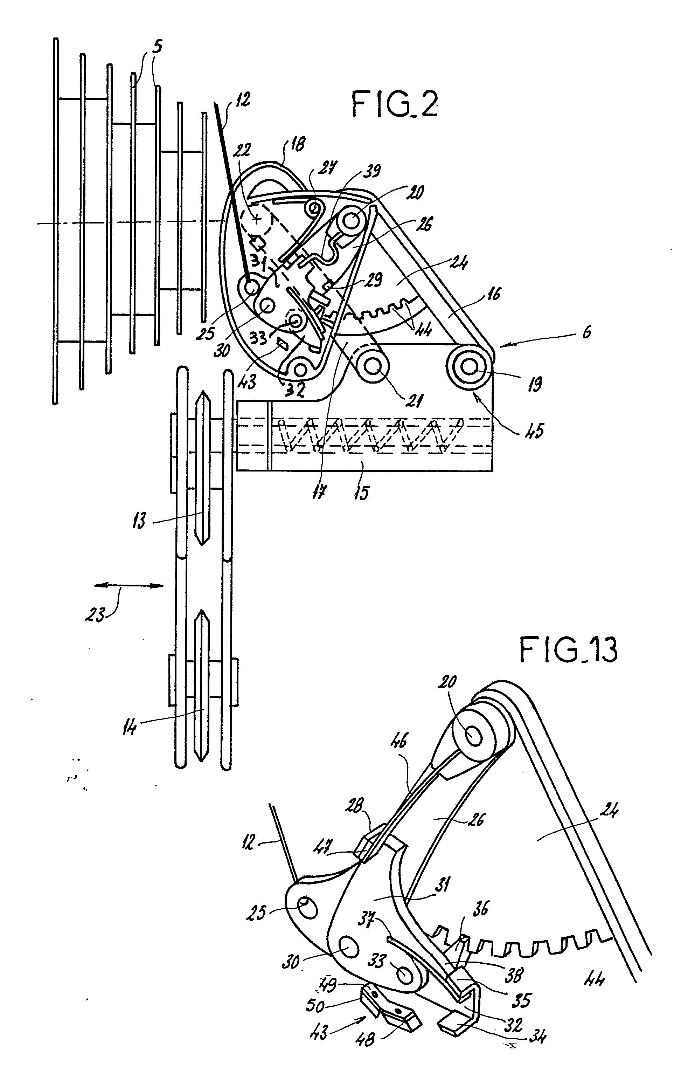

Partant de cette position de repos, on suppose que le câble 12 est actionné, en subissant et transmettant une traction de faible amplitude t. Comme le montre la figure 4, le bras 26 est alors déplacé, dans le sens de son pivotement autour de l'axe 20 à l'encontre de l'action du ressort de rappel 27. La pièce secondaire 32 pivote alors autour de l'axe 33, son ergot 36 échappant à la dent 44 du secteur 24 dans laquelle il était engagé, le talon 35 s'écartant du bec 38 en faisant fléchir le ressort à lame 37. La traction t sur le câble 12 se poursuivant, l'ergot 36 retombe dans la dent 44 suivante du secteur 24 - voir figure 5.

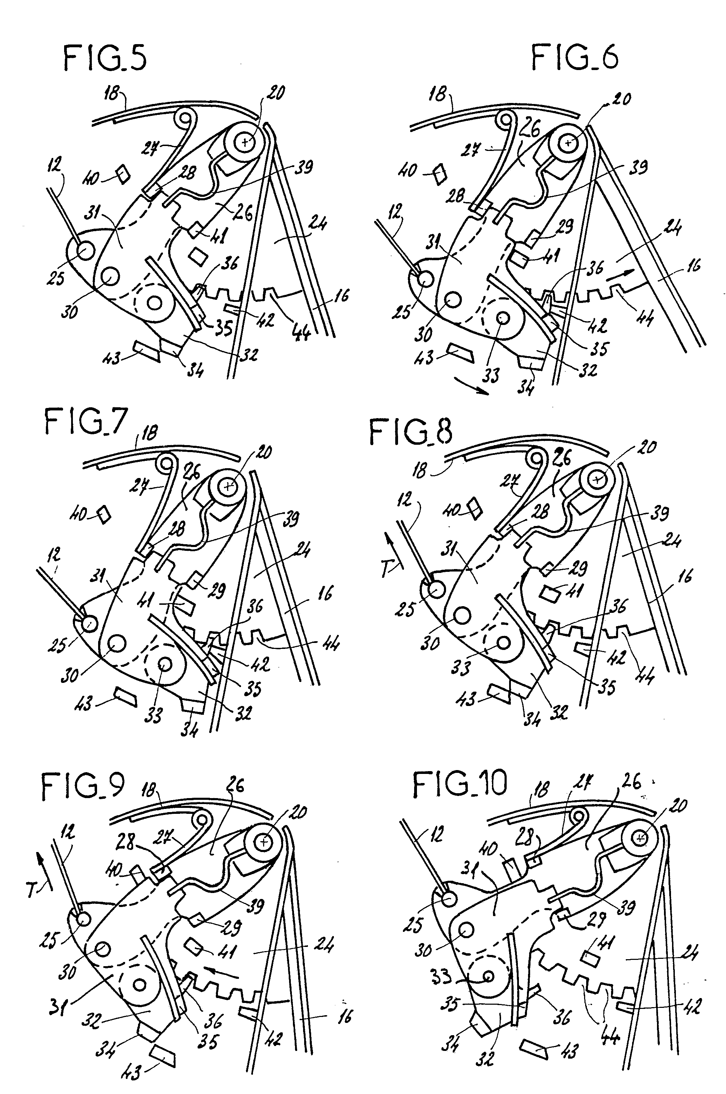

Si la traction t exercée sur le câble 12 est relâchée à ce moment précis, le ressort de rappel 27 ramène le bras pivotant 26 à sa position de repos, et l'ergot 36, accompagnant le bras 26 dans son pivotement, fait tourner aussi le secteur denté 24 autour de l'axe 20, suivant un angle de rotation correspondant à l'intervalle qui sépare deux dents 44 consécutives de ce secteur 24. Le mécanisme fait ainsi pivoter la biellette 16 du parallélogramme dans le sens contraire des aiguilles d'une montre, et il provoque par conséquent le passage de la chaîne vers un pignon 5 situé plus à droite (par référence à la figure 2). La figure 6 montre le mécanisme ramené dans sa position de repos à la fin de ce processus de changement de rapport.

En se référant aux figures 7 à 12, on envisage maintenant le cas où le câble 12 subit et transmet une traction de plus grande amplitude T, qui n'est pas relâchée après une longueur de déplacement correspondant à l'intervalle entre deux dents 44 du secteur 24, mais correspond au moins au double de cet intervalle. Partant de la position de repos indiquée à la figure 7 (position initiale identique à celle de la figure 3), on fait pivoter le bras 26 autour de l'axe 20, toujours dans le sens allant à l'encontre de l'action du ressort de rappel 27. Comme dans le cas précédent, l'ergot 36 de la pièce secondaire 32 échappe à la dent 44 dans laquelle il était engagé, et retombe dans la dent suivante - voir figure 8. A ce moment, le talon 34 de la pièce secondaire 32 vient porter contre un côté de la butée fixe 43.

Le mouvement de pivotement du bras 26 se poursuivant sous l'effet de la traction T prolongée sur le câble 12, la pièce secondaire 32 est maintenue en prise avec le secteur denté 24 par l'intermédiare de l'ergot 36, et ce secteur denté 24 est par conséquent entraîné en rotation autour de l'axe 20 dans le sens des aiguilles d'une montre, selon un angle correspondant au moins à l'intervalle entre deux dents 44. Entraînant avec lui dans le même sens la biellette 16 du parallélogramme, le secteur denté 24 provoque ainsi le passage de la chaîne vers un pignon 5 situé plus à gauche (toujours par référence à la figure 2).

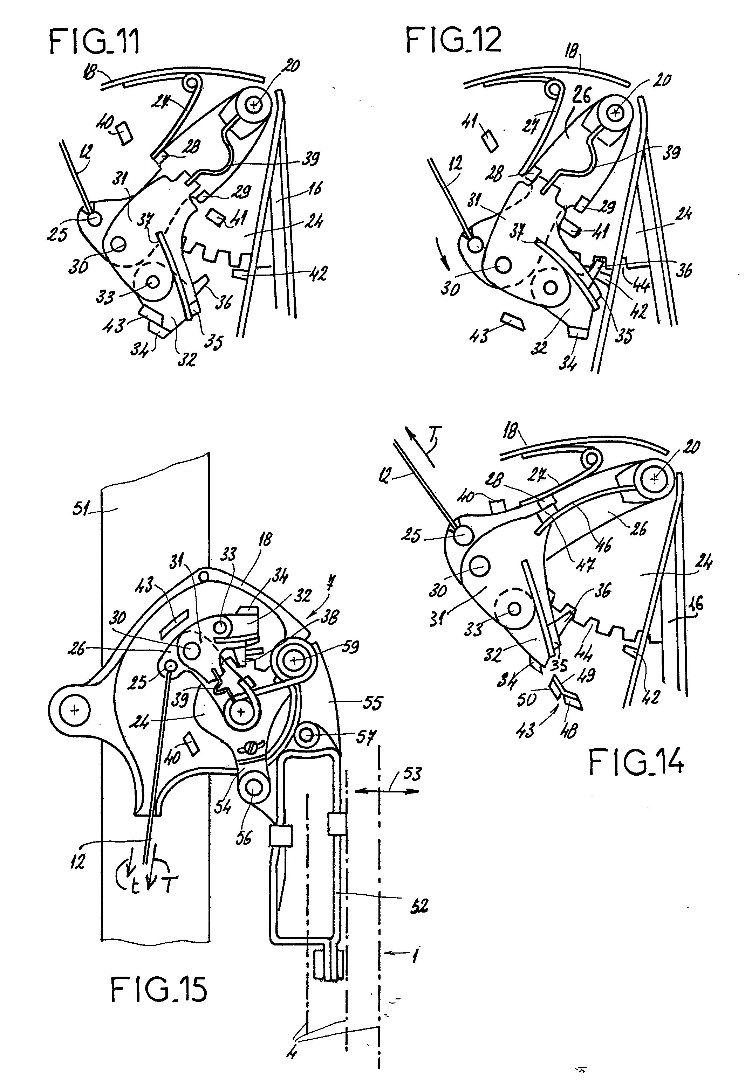

A ce stade, comme le montre la figure 9, l'épaulement situé sur le bord gauche de la pièce primaire 31 entre en contact avec la butée fixe 40 ; ceci entraîne un basculement de la pièce primaire 31, qui vient alors s'arrêter contre l'autre butée 29 portée par le bras 26, comme montré sur la figure 10. Le basculement de la pièce primaire 31 déplace la pièce secondaire 32 et dégage l'ergot 36 de la denture du secteur 24.

Lors du relâchement de la traction T sur le câble 12, le bras pivotant 26 est rappelé vers sa position initiale par le ressort 27. En raison du basculement précédent de la pièce primaire 31, le talon 34 de la pièce secondaire 32 passe, lors du mouvement de retour qui s'amorce, de l'autre côté de la butée fixe 43 que lors du mouvement aller - voir figure 11. Avant le retour en position de repos de l'ensemble du mécanisme, l'épaulement situé sur le bord droit de la pièce primaire 31 rencontre la butée fixe 41, ce qui occasionne un nouveau basculement de la pièce primaire 31 ramenant celle-ci contre la première butée 28, portée par le bras 26. L'ergot 36 revient alors s'engager dans une dent 44 du secteur 24, la butée fixe 42 assurant l'immobilisation en rotation de ce secteur 24 par appui sur l'ergot 36, comme le montre la figure 12.

Il est à noter que le fonctionnement décrit précédemment est rendu possible et sûr par l'adjonction sur le parallélogramme déformable, par exemple au niveau de l'axe 19, d'un dispositif de friction 45 qui freine les mouvements propres de d'ensemble formé par ce parallélogramme et par le secteur dentée 24. Par contre, le parallélogramme ne comporte ici aucun ressort de rappel.

Les figures 13 et 14 se rapportent à une variante du mécanisme décrit ci-dessus en référence aux figures 2 à 12 et appartenant à la commande d'un dérailleur arrière. Les éléments communs aux deux formes d'exécution sont désignés sur le dessin par les mêmes repères et ne feront pas l'objet d'une nouvelle description détaillée. On retrouve, dans la variante, les éléments principaux que sont le secteur denté 24, le bras pivotant 26, la pièce primaire 31 montée pivotante autour de l'axe 30 sur le bras 26, et la pièce secondaire 32 avec l'ergot 36, montée pivotante sur la pièce primaire 31 autour de l'axe 33.

Le bras pivotant 26 comporte, dans cette variante, une butée 28 unique, la seconde butée étant ici supprimée. Un ressort à lame 46, appuyé sur un bossage 47 de la pièce primaire 31, pousse cette pièce primaire 31 au repos contre la butée 28.

La butée fixe désignée par 42 dans la forme d'exécution précédente est aussi supprimée, et la butée 43 est modifiée pour constituer ici une butée "semi-mobile". Cette butée 43 comporte une première partie 48 fixe par rapport au boîtier 18, sur laquelle est fixée par collage et/ou rivetage une lame-ressort coudée 49. Une autre partie 50 est fixée, par les mêmes moyens, sur la lame-ressort 49 ; cette autre partie 50 constitue la partie mobile de la butée 43, compte tenu de la flexibilité de la lame-ressort 49.

Le fonctionnement reste identique à celui de la première forme d'exécution, dans le cas d'une traction exercée sur le câble 12 avec une faible amplitude. Si la traction T sur le câble 12 s'effectue sur une plus grande amplitude, le talon 34 de la pièce secondaire 32 passe d'un côté de la butée semi-mobile 43, et, grand le talon 34 a dépassé la butée semi-mobile 43, le bras 26 vient s'arrêter contre la butée fixe 40 et il peut alors être relâché - voir la position indiquée sur la figure 14.

Au cours du mouvement de retour du bras pivotant 26 sous l'effet du ressort de rappel 27, le talon 34 de la pièce secondaire 32 passe de l'autre côté de la butée semi-mobile 43, en forçant l'ergot 36 à s'éloigner des dents 44 du secteur 24, les pièces primaire 31 et secondaire 32 décrivant un pivotement. Après le dépassement de la butée semi-mobile 43, le talon 34 est libéré et, sous l'effet du ressort 37, l'ergot 36 revient s'engager dans une dent 44 du secteur 24, la butée fixe 42 intervenant de nouveau pour "verrouiller" le rapport qui vient d'être obtenu.

La figure 15 illustre l'application, à un dérailleur avant 7 fixé au tube de selle 51, de la commande réalisée selon la première forme d'exécution décrite plus haut. De manière bien connue, le dérailleur avant 7 comprend un étrier 52 qui est traversé par la chaîne, et dont le déplacement latéral selon la flèche 53 provoque le passage de la chaîne de l'un à l'autre des plateaux dentés 4, le pédalier 1 comprenant trois plateaux 4 dans l'exemple considéré. L'étrier 52 est monté mobile par un système de parallélogramme déformable avec deux biellettes 54 et 55 : l'étrier 52 est articulé, autour d'axes respectifs 56 et 57, aux extrémités inférieures des deux biellettes 54 et 55 dont les extrémités supérieures sont articulées, suivant des axes respectifs 58 et 59, sur un boîtier 18 fixé au tube de selle 51.

Le boîtier 18 referme un mécanisme réalisé selon le principe décrit plus haut, donc comprenant principalement un secteur denté 24, un bras pivotant 26, une pièce primaire 31 et une pièce secondaire 32, ainsi que diverses butées. Le mécanisme fonctionne de la même manière que celui décrit plus haut dans le cas d'un dérailleur avant, sous l'effet d'une traction d'amplitude différenciée t ou T exercée sur le câble 12, et grâce à une friction exercée sur l'un des axes du parallélogramme, pour contrôler la position angulaire du secteur denté 24. Ce dernier est lié en rotation de façon réglable à la biellette 54, pour commander le positionnement et le déplacement de l'étrier 52.

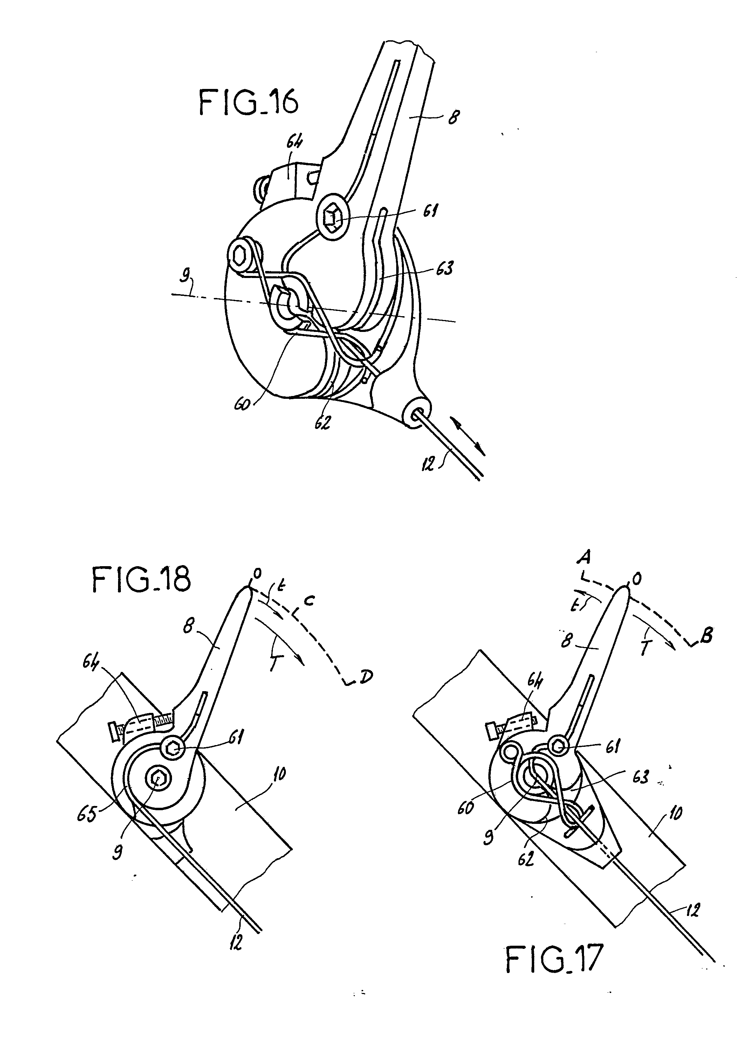

Enfin, les figures 16 à 18 représentent une manette 8, destinée aux changements de vitesses avant ou arrière pourvus d'une commande selon la présente invention. La manette 8 est montée libre en rotation autour de son axe de pivotement 9, et elle occupe normalement une position de repos dont elle est seulement écartée pour actionner le dérailleur avant ou arrière par l'intermédiaire du câble 12.

Dans le cas des figures 16 et 17, la manette 9 est prévue de manière à exercer sur le câble 12 une traction t de faible amplitude, lorsqu'elle est poussée vers l'avant jusqu'à la position indiqué A, et à exercer sur le câble 12 une traction T de plus grande amplitude, lorsqu'elle est tirée en sens inverse, donc vers l'arrière, jusqu'à la position indiquée B.

Un ressort 60 enserre le câble 12, dont l'extrémité est bloquée en 61 sur la manette 8, et il assure le rappel et le maintien de cette manette 8 dans sa position de repos 0. La périphérie de la manette 8 forme une première came 62, sur laquelle le câble 12 s'enroule lorsque cette manette 8 est poussée vers l'avant, et une seconde came 63, sur laquelle le câble 12 s'enroule lorsque cette manette 8 est tirée vers l'arrière. Une butée réglable 64 limite le pivotement de la manette 8 autour de l'axe 9 lorsque celle-ci est poussée vers l'avant. La manette 8 revient d'elle-même en position de repos, sous l'effet du ressort 60, dès qu'elle est relâchée.

Dans une variante, montrée à la figure 18, les deux actions différenciées sont exercées sur la manette 8 dans le même sens, à savoir dans les deux cas une traction vers l'arrière : la manette 8 est tirée soit jusqu'à la position C assez proche de la position de repos 0, soit jusqu'à la position D plus éloignée de cette position de repos. La manette 8 comporte ici une seule came 65, sur laquelle le câble 12 s'enroule plus ou moins fortement selon la position C ou D atteinte par cette manette 8.

Comme il va de soi, l'invention ne se limite pas aux seules formes d'exécution de cette commande pour changements de vitesses de cycles et véhicules similaires qui ont été décrites ci-dessus, à titre d'exemples ; elle en embrasse, au contraire, toutes les variantes de réalisation et d'application respectant le même principe. En particulier, l'on ne s'éloignerait pas du cadre de l'invention :

- par des modifications de forme et/ou disposition des organes du mécanisme, ou par un agencement différent des butées intervenant dans le fonctionnement de ce mécanisme ;
- par une modification de la liaison réalisée entre le secteur denté du mécanisme et l'un des éléments mobiles du parallélogramme déformable ;
- par le recours à tous moyens équivalents dans le mécanisme, tels qu'une bille poussée par un ressort vers la denture pour l'indexation du secteur denté ;
- par une destination différente de celle décrite, le mécanisme selon la variante des figures 13 et 14 pouvant ainsi être appliqué aussi à un dérailleur avant ;
- par remplacement de la manette par tout moyen équivalent d'actionnement, placé au même endroit ou en un autre point, et pouvant être un levier, un basculeur ou un bouton actionné manuellement, voire un micromoteur ;
- par l'adjonction de tous dispositifs auxiliaires, tels que des moyens de réglage de la tension du câble, ou des moyens complémentaires permettant, dans le cas d'un dérailleur avant, à l'étrier de se recentrer automatiquement par rapport à la chaîne.

## Revendications

1. Commande pour changements de vitesses de cycles et similaires, du type "dérailleur", avec moyens de guidage (13,14; 52) de la chaîne (3) déplaçables transversalement (flèches 23,53) entre au moins deux positions distinctes au moyens d'un organe de traction tel que câble (12), à partir d'un moyen d'actionnement tel que manette (8) situé à distance, caractérisée en ce qu'elle comprend essentiellement, en combinaison :
- un organe mobile (26) récepteur du déplacement de l'organe de traction tel que câble (12),
- un organe denté mobile (24), lié dans ses déplacements aux moyens de guidage (13,14 ; 52) de la chaîne (3), et comportant des dents (44) en nombre au moins égal à celui des positions distinctes occupées par lesdits moyens de guidage de la chaîne,
- un organe de mémoire (31,32) porté par l'organe récepteur (26) et coopérant avec la denture de l'organe denté (24), et
- des moyens de basculement (40,41,42,43) agissant sur l'organe de mémoire (31,32) au cours de ses déplacements accompagnant ceux de l'organe récepteur (36), de telle sorte que, pour un déplacement de l'organe de traction tel que câble (12) d'une faible amplitude, suivi d'un relâchement, l'organe denté (24) est déplacé dans un premier sens selon une course correspondant à l'intervalle entre deux dents (44) et, pour un déplacement de l'organe de traction tel que câble (12) d'une plus grande amplitude, toujours suivi d'un relâchement, l'organe denté )24) est déplacé dans un second sens également selon une course correspondant à l'intervalle entre deux dents (44).

2. Commande pour changements de vitesses de cycles et similaires, selon la revendication 1, caractérisé en ce que l'organe récepteur (26) est constitué par un bras monté pivotant autour d'un axe (20), soumis à l'action d'un ressort de rappel (27) et actionné unidirectionnellement par l'organe de traction tel que câble (12) dont une extrémité est attachée (en 25) à ce bras pivotant (36).

3. Commande pour changements de vitesses de cycles et similaires selon la revendication 1 ou 2, caractérisé en ce que l'organe denté (24) est un secteur, monté tournant par son sommet autour d'un axe (20) et pourvu d'une série de dents (44) sur son bord incurvé.

4. Commande pour changements de vitesses de cycles et similaires selon l'ensemble des revendications 2 et 3, appliquée à un dérailleur à parallélogramme déformable, caractérisée en ce que le bras précité (26) et le secteur denté (24) sont montés pivotants autour du même axe (20 ; 58) confondu avec un axe d'articulation d'une biellette (16 ; 54) du parallélogramme, le secteur denté (24) étant lié en rotation avec la biellette (16 ; 54), de préférence d'une manière réglable.

5. Commande pour changements de vitesses de cycles et similaires selon l'une quelconque des revendications 2 à 4, caractérisée en ce que l'organe de mémoire comprend une pièce primaire (31) articulée directement (en 30) sur le bras pivotant (26) et rappelée dans au moins une position privilégiée, et une pièce secondaire (32) articulée (en 33) sur la pièce primaire (31) et pourvue d'un ergot (36) tourné vers l'organe denté (24) et prévu pour s'engager dans les dents (44) de cet organe (24).

6. Commande pour changements de vitesses de cycles et similaires selon la revendication 5, caractérisée en ce que la pièce primaire (31) est conçue comme une pièce basculante, mobile entre deux positions stables définies par des butées (28,29) portées par le bras pivotant (26) et soumise à l'action d'un ressort de dépassement de point mort (39), les moyens de basculement (40,41,42,43) occasionnant le passage de ladite pièce primaire (31) d'une position stable à l'autre.

7. Commande pour changements de vitesses de cycles et similaires selon la revendication 5, caractérisée en ce que la pièce primaire (31) est poussée par un ressort (46) vers une position stable unique définie par une butée (28) portée par le bras pivotant (26), les moyens de basculement (40, 42, 43) occasionnant la séparation de la pièce primaire (31) et de la butée (28).

8. Commande pour changements de vitesses de cycles et similaires selon la revendication 6 ou 7, caractérisée en ce que les moyens de basculement comprennent une pluralité de butées essentiellement fixes (40,41,42,43).

9. Commande pour changements de vitesses de cycles et similaires selon la revendication 8, caractérisée en ce que la pièce secondaire (32) comporte deux talons (34,35), le premier talon (34) coopérant avec une butée (43) appartenant aux moyens de basculement, en passant alternativement d'un côté et de l'autre de cette butée (43), et le second talon (35) étant soumis à l'action d'un ressort (37) poussant ce talon (35) contre un bec (38) de la pièce primaire (31).

10. Commande pour changements de vitesses de cycles et similaires selon l'ensemble des revendications 7 à 9, caractérisée en ce que la butée (43), avec laquelle coopère le premier talon (34) de la pièce secondaire (32), est une butée semi-mobile comportant une partie fixe (48) et une partie mobile (50) réunie à la partie fixe (48) par l'intermédiaire d'une lame-ressort (49).

11. Commande pour changements de vitesses de cycles et similaires selon l'une quelconque des revendications 1 à 10, dans laquelle l'organe de traction est un câble (12), caractérisée en ce que le moyen d'actionnement est une manette (8) déplaçable par pivotement, à partir d'une position de repos (0), vers l'une ou l'autre de deux autres positions (A,B ; C,D), de manière à exercer sur le câble (12) soit une traction de faible amplitude (t), soit une traction de plus grande amplitude (T), des moyens à ressort (60) étant prévus pour ramener la manette (8) dans sa position de repos (0) à partir de l'une ou l'autre des deux autres positions (A,B ; C,D).

12. Commande pour changements de vitesses de cycles et similaires selon la revendication 11, caractérisée en ce que ces deux autres positions (A,B) de la manette (8) sont situées de part et d'autre de la position de repos (0), et en ce que la manette (8) comporte deux cames (62,63) pour l'enroulement du câble (12), le câble (12) s'enroulant autour de l'une ou l'autre came (62,63) et sur des longueurs différentes selon le sens d'actionnement de la manette (8).

FIG_1

FIG_3

FIG_4

FIG.2

FIG.13

FIG_5

FIG_6

FIG_7

FIG_8

FIG_9

FIG_10

EP 0 311 536 A2

FIG.11

FIG.12

FIG.15

FIG.14

EP 0 311 536 A2

FIG_16

FIG_18

FIG_17